# EUROPEAN PATENT SPECIFICATION

(11) **EP 2 277 376 B1**
(45) Date of publication and mention of the grant of the patent: **13.08.2014**
(21) Application number: 09468008.9
(22) Date of filing: 27.10.2009
(51) Int. Cl.: A01M 7/00

(54) **Sprayer for targeted application of phytopharmaceutical preparations in permanent crops**
Zerstäuber zur gezielten Auftragung von phytopharmazeutischen Zubereitungen bei Dauerkulturen
Pulvérisateur pour une application ciblée de préparations phytopharmaceutiques dans des cultures permanentes

(30) Priority: 20.07.2009 SI 200900203
(43) Date of publication of application: 26.01.2011
(73) Proprietor: Kmetijski institut Slovenije, 1000 Ljubljana (SI)
(72) Inventor: Jejcic, Viktor, 1000 Ljubljana (SI); Hocevar, Marko, 1236 Trzin (SI); Godesa, Tone, 1381 Rakek (SI); Herakovic, Niko, 8259 Bizeljsko (SI)
(74) Representative: Golmajer Zima, Marjanca

(56) References cited:
- EP-A1- 0 986 954
- FR-A1- 2 767 254
- FR-A1- 2 837 667
- US-A- 5 176 322
- US-A- 5 921 019
- US-A1- 2006 214 022
- US-B1- 6 622 935

## Description

### Subject of Invention

The subject of the present invention is a sprayer for targeted application of phytopharmaceutical preparations in permanent crops. The sprayer of the invention is preferably intended as an agricultural tractor attachment due to economic reasons, however, there is technically no obstacle for its being designed as an independent transport unit.

### Technical Problem

The technical problem solved by the present invention is how to design such sprayer that would allow applying a predetermined optimum specific quantity of phytopharmaceutical preparations onto target surfaces of plants in permanent crops by simultaneously keeping the consumed quantity of phytopharmaceutical preparations at the lowest level possible. In other words, the goal of the invention is to increase the quantity yield of phytopharmaceutical preparations without any impact on the quality of the preparation sprayed equally over the intended spots on plants.

### Prior Art

Known sprayers of this type are formed as agricultural tractor attachments, on which at least one sprayer assembly of an optional known variant is mounted. Direction of spraying is set prior to spraying based on the average size and shape of plant crowns. When driving through a permanent crop, the tractor driver manually changes the quantity of the preparation as he progresses based on the changed density of plant crowns. A drawback of this solution lies in that the tractor driver must be constantly attentive to manually adapt the quantity and direction of spraying, but we should not forget that the driver must first and above all be attentive to proper and safe driving. It can therefore not be expected from the driver to adequately meet the requirement for optimum spraying.
The patent specification US 5 921 019 A (Bent Baek) discloses a device of this type, which is characterized by comprising several pairs of U-frames with spray units on the overhead boom, wherein each such pair of frames is intended to spray each individual row in a tree growing. A drawback of this solution is a huge and high construction, which is unfavourable when driving outside the growing, e. g. on a road. There is yet another disadvantage, namely it sprays in a slanted position from above and below, however only from both lateral sides of a tree, wherein the sides of a tree canopy adjoining the next tree row are sprayed in a considerably poorer way. If said device were upgraded with a means that would allow each pair of frames to turn around a canopy to be sprayed, the vehicle towing and/or carrying such spraying device should stop during spraying process. This would considerably contribute to a longer time needed to spray a plantation. A still more important drawback lies in that the height of the device needs to be adapted to the changing height of trees, which requires additional function of the control and is time consuming, as the height needs to be changed, which makes the entire spraying process lengthier. There is also a need for spraying individual trees, e. g. in a park. The device of this invention is not suited for this purpose.

The device disclosed in the patent specification EP 0 986 954 A1 (Bent Baek) resembles the above device. The overhead boom is replaced by two arms that can be moved aside and carry curved frames with spray units similar to those described in the mentioned patent specification US 5 921 019 A. The frames are obviously rotatable around a vertical axis, so this variant shares all characteristics and drawbacks of the above invention.

Another sprayer is known from FR 2837667.
Further, a spraying device of this type is known from the patent disclosure US 2006/0214022 A1 (Leon Joseph Caccaviello). This variant is characterized in that at least one lateral arm assembly is arranged on the device, which arm assembly can be moved towards the trees located at a side of the device. At the free end of this arm assembly there is a downward directed support with several sprayers that are fixedly oriented laterally outwards with respect to driving direction of the device, wherein this arm assembly can also rotate around the vertical axis by means of an actuator as well as tilting to a side by means of another actuator. Spraying by using this device is efficient in equally developed tree canopies. However, a tree plantation can have a relatively high number of unequally developed canopies, which, however, cannot be sprayed with such device efficiently enough.

Studies involved in optimum application of preparations on plants have shown a need for several sprayer units being oriented in different directions. These units must function in individual moments in various, yet properly selected work modes.

Based on the above, an original solution to the above set technical problem is needed that would function independently on the tractor driver.

### Solution to the Technical Problem

The described technical problem is solved by a sprayer of the invention that is preferably designed as an agricultural tractor attachment and the tractor provides said sprayer with proper mobility and with a source of energy for the operation of its units.

A characteristic of the sprayer of the invention is in that there are several spraying units arranged on the base frame. Each unit is separately and independently controlled as to the quantity of air jet comprising a phytopharmaceutical preparation and as to direction, height and cross-section of the jet. Each sprayer assembly is mounted on a frame and movable in height by means of a controlled actuator, with which direction and height of the jet are defined. The sprayer assembly is also pivotable in both horizontal and vertical directions in each position by means of adequate actuators.

Sprayer assemblies are optional known sprayer assemblies, preferably injection sprayers, selected with respect to the purpose of spraying of the most often sprayed plant varieties.

Sprayer assemblies may have common units, like a spray chemical vessel, a common source of air jet created by a ventilator with changeable blades.

Actuators are optional known elements. They are preferably hydraulic actuators, since hydraulic installation is a standard on agricultural tractors.

The entire mentioned mechanical assembly is computerised: Selected optical and/or ultrasound sensors detect in real time the shape of a plant crown intended for spraying in a certain moment. The sensors detect the size and density of the crown. Using a predefined algorithm for a type of plant and the data received from sensors, the computer determines the height of individual sprayer assemblies and constantly changes their vertical and horizontal angle of spraying by adapting the quantity of the air jet and the quantity of the preparation contained therein, when the agricultural tractor moves with known speed past each plant intended to be sprayed.

The above set technical problem is herewith solved.

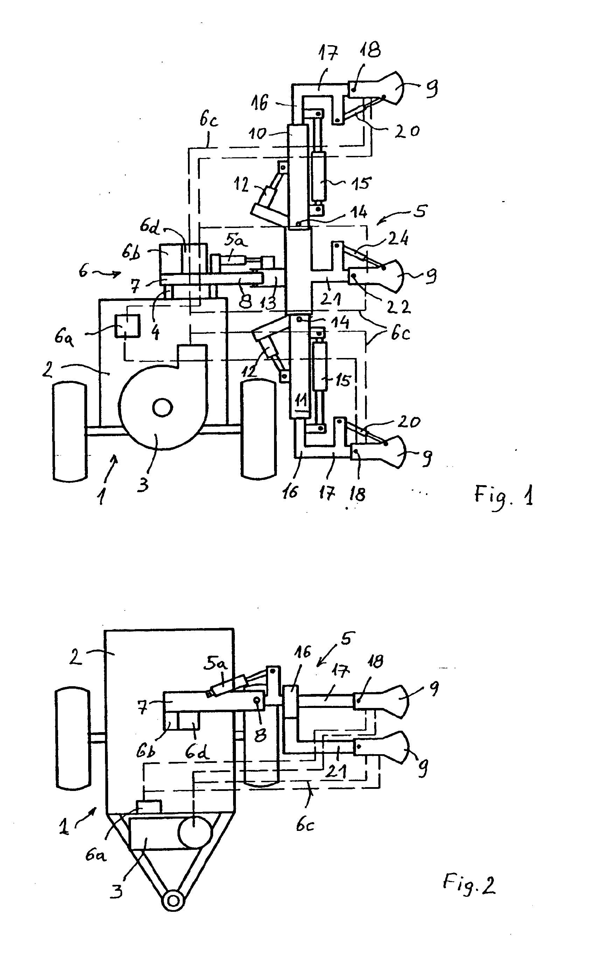

The invention will now be described in more detail by way of an embodiment and the drawings, showing in
Fig. 1 a schematic view of the sprayer of the invention mounted to an agricultural tractor, back view
Fig. 2 the same in perspective view.

A sprayer for targeted application of phytopharmaceutical preparations in permanent crops is preferably designed as an agricultural tractor attachment or trailer based on the intended properties of spraying: size, especially the height of the crop. The sprayer consists of a known frame **1** conceived either as a movable trailer or as a standard agricultural tractor three-point attachment. On the frame **1** there is a vessel **2** for spray chemicals, a compressor **3** for the creation of an air jet, which will be described in more detail later, and a support **4** of a sprayer assembly **5** comprising the characteristics of the invention. Said support **4** is also provided with additional elements **6** like a pump **6a** for liquid spraing chemicals, valves **6b** for liquid chemicals control, pipes **6c** for conducting air from said compressor **3** to the final element, which will be described in more detail later, and electronic control assembly **6d.**

On said support **4** a cantilever **7** is fastened, on which there is a vertical hinge **8** provided with a bunch of sprayer nozzles **9** via extractable and pivotable legs **10, 11** of said nozzles **9,** which are additionally pivotable in vertical direction. All rotations are performed continuously and mutually independently by actuators **12.** These are preferably hydraulic cylinders connected to the source of hydraulic pressure of the agricultural tractor. The actuators **12** are computerised. The sensors are arranged on the sprayer and/or tractor and are not shown in figures. The sensors detect the changes in light or ultrasound reflection. Computerised control functions by the algorithm based on the change in light, ultrasound change as sensed by sensors, further based on the principle of computer sight etc. and continuously determines the current position and orientation of said nozzles **9** and the quantity and pressure of the chemicals sprayed with respect to the speed of tractor movement or the vicinity, size and density of each plant crown to be sprayed. The quantity and pressure of the air jet from the nozzles is also controlled. Computer control is not a subject of the present invention. The entire sprayer assembly **5** is pivotable in said hinge **8** by means of a computerised actuator **5a.**

On said hinge **8** a holder **13** is pivotable in horizontal plane and within said holder **13** an upper leg **10** and a lower leg **11** are pivotably mounted via horizontal hinges **14.** Said leg **10** is oriented upwards, whereas said leg **11** is oriented in opposite direction, i.e. downwards. Said legs **10** and **11** are bendable around said hinges **14** towards an individual plant by means of electronically controlled actuators **12.** Further, said legs **10** and **11** are axially extendable by means of electronically controlled actuators **15.** On extendable parts **16** of each leg **10** and **11** a cantilever **17** provided with a hinge **18** is arranged in direction towards plants. On said hinge a nozzle **19** is pivotably mounted by means of an electronically controlled actuator **20.** In a preferred embodiment, said legs **10** and **11** are disposed together with said nozzles **9** is the same vertical imaginary plane.

Said holder **8** is further provided by another cantilever 21 oriented towards the expected position of a plant to be sprayed with said nozzles **9.** The free end of said cantilever **21** is provided with a hinge **22,** on which said nozzle **9** is vertically pivotable and the tilt of said nozzle **9** is controlled by a computerised actuator **24.**

The upper leg **10** is extendable up to an optional length based on the anticipated highest group of plants, for which individual chemical spraying is intended. If low crops in plantations are concerned, the highest point to be sprayed is lower than in instances when spraying is intended for high decorative trees in tree rows or parks. Of course, this does not affect the essence of the present invention.

The sprayer of the invention moves past plants intended to be sprayed at an approximately defined distance. Movement is to be effected by an agricultural tractor for instance. A device for detecting position, height and density of a plant crown defines the mutually harmonised movement of all actuators in connection with the speed of movement of the sprayer past each plant by its computer algorithm that operates on the basis of the data received from the sensors; it further defines the time of openness of an individual nozzle and the content (pressure) of a liquid chemical as well as the strength of the air jet. It is therefore achieved that during a tangential movement past a plant crown half of the crown is optimally sprayed.

It is understandable that two sprayers for simultaneous spraying of two rows of crop on one side can be mounted on the same frame.

It is further understandable that a man skilled in the art can design other embodiments based on the knowledge of the above disclosure without circumventing the essence of the invention defined in the appended claims.

## Claims

1. A sprayer for targeted application of phytopharmaceutical preparations in permanent crops consisting of a bracket **(1)** as a trailer or as a standard agricultural tractor three-point attachment, wherein on said bracket **(1)** there is arranged a vessel **(2)** for spray chemicals, a compressor **(3)** for the creation of an air jet, a support **(4)** of a sprayer assembly **(5)** and also additional elements **(6)** like a pump **(6a)** for liquid spraying chemicals, valves **(6b)** for liquid chemicals control, ducts **(6c)** for conducting air from said compressor **(3)** and a control assembly **(6d)** with sensors, a cantilever **(7)** is arranged on a support **(4)**, **characterised in that** on said cantilever **(7)** a holder **(13)** is rotatably arranged in horizontal direction over a vertical hinge **(8),** said holder **(13)** having telescopic legs **(10, 11)** each extendable by way of actuators **(15)** upwards and downwards, said legs **(10, 11)** being pivotable in a hinge **(14)** to a side toward each sprayed plant via actuators **(12),** wherein on each leg **(10, 11)** there is arranged a nozzle **(9)** of a phytopharmaceutical preparation, said nozzle being rotatable upwards and downwards by way of actuators **(20),** wherein a pressurized jet from the compressor **(3)** is guided to an area at each nozzle **(9)** in direction of movement of the phytopharmaceutical preparation, and that a cantilever **(21)** provided with a rotatably arranged nozzle **(9)** for a liquid phytopharmaceutical preparation is arranged on the holder **(13)** between said legs **(10, 11)** in direction of each sprayed plant, wherein a pressurized jet from the compressor **(3)** is guided to an area at each nozzle **(9)** in direction of movement of the phytopharmaceutical preparation.

## Patentansprüche

1. Sprühvorrichtung zur gezielten Auftragung von phytopharmazeutischen Zubereitungen in Dauerkulturen, die aus einer Halterung (1) als Anhänger oder als eine standardmäßige Dreipunktkupplung für eine landwirtschaftliche Zugmaschine besteht, wobei an der Halterung (1) ein Behälter (2) für Sprühchemikalien, ein Kompressor (3) zur Bildung eines Luftstrahls, eine Stütze (4) einer Sprühvorrichtungsanordnung (5) sowie zusätzliche Elemente (6) wie eine Pumpe (6a) zum Sprühen von Flüssigchemikalien, Ventile (6b) zur Steuerung von Flüssigchemikalien, Leitungen (6c) zum Leiten von Luft von dem Kompressor (3) und eine Steueranordnung (6d) mit Sensoren angeordnet sind, wobei ein Ausleger (7) an einer Stütze (4) angeordnet ist, **dadurch gekennzeichnet, dass** ein Halter (13) drehbar in horizontaler Richtung über ein vertikales Scharnier (8) an dem Ausleger (7) angeordnet ist, wobei der Halter (13) teleskopartige Schenkel (10, 11) hat, die jeweils mittels Stellgliedern (15) nach oben und unten ausfahrbar sind, wobei die Schenkel (10, 11) über Stellglieder (12) in einem Scharnier (14) zu einer Seite zu jeder besprühten Pflanze schwenkbar sind, wobei an jedem Schenkel (10, 11) eine Düse (9) für eine phytopharmazeutische Zubereitung angebracht ist, wobei die Düse über Stellglieder (20) nach oben und unten drehbar ist, wobei ein Druckstrahl vom Kompressor (3) zu einem Bereich an jeder Düse (9) in Bewegungsrichtung der phytopharmazeutischen Zubereitung geführt wird, und dass ein mit einer drehbar angeordneten Düse (9) für eine flüssige phytopharmazeutische Zubereitung versehener Ausleger (21) am Halter (13) zwischen den Schenkeln (10, 11) in der Richtung jeder besprühten Pflanze angeordnet ist, wobei ein Druckstrahl vom Kompressor (3) zu einem Bereich an jeder Düse (9) in Bewegungsrichtung der phytopharmazeutischen Zubereitung geführt wird.

## Revendications

1. Pulvérisateur pour une application ciblée de préparations phytopharmaceutiques dans des cultures permanentes, comprenant une console (1) en tant que remorque ou en tant que fixation standard à trois points pour tracteur agricole, dans lequel, sur ladite console (1), sont disposés un récipient (2) pour des produits chimiques à pulvériser, un compresseur (3) destiné à produire un jet d'air, un support (4) d'un ensemble de pulvérisateur (5) ainsi que des éléments supplémentaires (6) tels qu'une pompe (6a) pour des produits chimiques liquides à pulvériser, des vannes (6b) pour la commande des produits chimiques liquides, des conduits (5c) pour conduire de l'air depuis ledit compresseur (3) et un ensemble de commande (6d) avec des capteurs, un bras en porte-à-faux (7) étant disposé sur un support (4) , **caractérisé en ce que** sur ledit bras en porte-à-faux (7) est disposé à rotation un support (13) dans la direction horizontale par le biais d'une articulation verticale (8), ledit support (13) ayant des branches télescopiques (10, 11) pouvant chacune être déployées au moyen d'actionneurs (15) vers le haut et vers le bas, lesdites branches (10, 11) pouvant pivoter dans une articulation (14) d'un côté vers chaque plante pulvérisée par le biais d'actionneurs (12), une buse (9) d'une préparation phytopharmaceutique étant disposée sur chaque branche (10, 11), ladite buse pouvant tourner vers le haut et vers le bas par le biais d'actionneurs (20), un jet sous pression provenant du compresseur (3) étant guidé vers une zone au niveau de chaque buse (9) dans un sens de déplacement de la préparation phytopharmaceutique, et **en ce qu'**un bras en porte-à-faux (21) pourvu d'une buse disposée à rotation (9) pour une préparation liquide phytopharmaceutique est disposée sur le support (13) entre lesdites branches (10, 11) dans la direction de chaque plante pulvérisée, un jet sous pression provenant du compresseur (3) étant guidé vers une zone au niveau de chaque buse (9) dans la direction du déplacement de la préparation phytopharmaceutique.
